**Europäisches Patentamt**

(19) **European Patent Office**

**Office européen des brevets**

(11) Numéro de publication: **0 117 230**
**B1**

(12) **FASCICULE DE BREVET EUROPÉEN**

(45) Date de publication du fascicule du brevet:
26.08.87

(21) Numéro de dépôt: **84810057.4**

(22) Date de dépôt: **31.01.84**

(51) Int. Cl.⁴: **G 01 N 27/56**

(54) Sonde pour la mesure de la pression partielle de l'oxygène dans une atmosphère de gaz.

(30) Priorité: **04.02.83 CH 652/83**

(43) Date de publication de la demande:
**29.08.84 Bulletin 84/35**

(45) Mention de la délivrance du brevet:
**26.08.87 Bulletin 87/35**

(84) Etats contractants désignés:
**AT BE CH DE FR GB IT LI LU NL SE**

(56) Documents cités:
**DE - A - 2 837 680**
**DE - A - 2 938 179**
**FR - A - 2 173 564**

**JOURNAL OF PHYSICS E. SCIENT. INSTR., vol. 12, no. 10, octobre 1979, pages 921-922. D. BRAUNSHTEIN et al.: "A sample holder for fuel cell measurements at high temperature"**

(73) Titulaire: **Crevoiserat, Térésa, CH-2944 Bonfol/JU (CH)**

(72) Inventeur: **Crevoiserat, Térésa, CH-2944 Bonfol/JU (CH)**

(74) Mandataire: **Rochat, Daniel Jean et al, Bovard SA Ingénieurs-conseils ACP Optingenstrasse 16, CH-3000 Bern 25 (CH)**

## Description

La présente invention a pour objet une sonde pour mesurer la pression partielle d'oxygène dans une atmosphère de gaz par rapport à une atmosphère de référence, comprenant une pastille d'électrolyte solide montée dans une tête de mesure à une extrémité de la sonde, un support tubulaire qui porte cette pastille et sépare l'atmosphère de gaz de l'atmosphère de référence, et des électrodes de mesure et de référence en contact chacune avec une des faces de la pastille.

On sait que les sondes de ce genre sont utilisées notamment pour contrôler l'atmosphère des fours dans lesquels on effectue des traitements thermiques, par exemple des traitements de cémentation. La pastille d'électrolyte solide est en général une pièce cylindrique en oxyde de zirconium fritté et stabilisé au moyen d'oxyde d'yttrium. Toutefois, d'autres matériaux ont également été proposés pour la réalisation de ces pastilles et les sondes du genre mentionné au début sont utilisées également, par exemple, pour la détermination du rapport entre le monoxyde et le bioxyde de carbone dans l'atmosphère du four ou pour d'autres mesures encore.

L'expérience montre que la réalisation de sondes capables de donner une mesure fidèle de la quantité d'oxygène présente dans l'atmosphère du four se heurte à de nombreuses difficultés.

L'une des difficultés principales que l'on rencontre notamment avec les sondes destinées aux fours de traitements thermiques découle du fait que la partie de la sonde qui est engagée à l'intérieur du four doit travailler à des températures de l'ordre de 900° à 1000°C. C'est d'ailleurs dans ce domaine de températures que l'on peut récolter, entre l'électrode de référence et l'électrode de mesure, une différence de potentiel qui constitue une mesure fiable du rapport des teneurs en oxygène des deux atmosphères.

Une autre difficulté découle du fait qu'il est essentiel de maintenir une étanchéité parfaite entre l'atmosphère à mesurer et l'atmosphère de référence, afin que cette dernière ne soit pas polluée par l'atmosphère à mesurer.

Une troisième difficulté résulte de la faible durée de vie des pastilles de zirconium exposées à l'atmosphère des fours.

Très souvent, les atmosphères des fours destinés aux traitements thermiques sont polluées par des vapeurs ou fumées actives provenant de restants de sel sur le matériel de chargement, par exemple, ou de vapeurs provenant de la trempe, d'huile brûlée, de pâte de protection, etc.

Ces vapeurs ou fumées actives indésirables causent des problèmes divers à tous les systèmes actuels de mesure ($CO/CO_2$, point de rosée, etc.), et aussi aux sondes à oxygène, car elles altèrent, d'une manière irréversible, l'oxyde de zirconium stabilisé.

La durée de vie d'une sonde à oxygène, dans une atmosphère de four où les conditions sont particulièrement rudes est très variable. Dans les conditions idéales (pas de sel de rempe, pas de vibrations, pas de vapeurs d'huile, atmosphère bien purgée à l'azote avant l'introduction de la nouvelle fournée, lavage impeccable des pièces et du matériel de chargement), les sondes connues sur le marché européen ont une tenue de plus d'une année; mais ces cas sont rares et dans le 60% des cas la durée de vie est de six semaines à six mois.

Dans la plupart des sondes connues, par exemple, dans celles dont le mémoire exposé DE-OS 3 025 670 décrit la constitution, une pastille de zirconium est fixée de façon étanche par frettage ou chassage à chaud à l'intérieur d'un tube de support qui est, lui-même, en une matière isolante. Ce tube de support doit avoir un coefficient de dilatation thermique aussi voisin que possible de celui de l'oxyde de zirconium fritté, ce qui exige l'emploi, pour ce tube, de matériaux qui sont également fort coûteux. La détérioration rapide de la pastille entraîne donc la nécessité de remplacer à intervalles réguliers non seulement la pastille mais également le tube de support, c'est-à-dire les éléments les plus coûteux de la sonde.

Une autre sonde du type mentionné au début est décrite dans le brevet français FR-2 173 564. Toutefois, dans cette construction connue, les électrodes de mesure et de référence sont situées à la périphérie de la pastille et prennent la forme de bagues en platine. Pour améliorer le captage du potentiel de mesure, la publication précitée indique que la face de mesure de la pastille peut être revêtue d'une couche poreuse en platine, mais l'expérience montre que si cette solution peut convenir lorsqu'il s'agit de déterminer la teneur en oxygène des gaz d'échappement d'un moteur ou des fumées d'une installation de chauffage, elle ne convient pas dans les applications où la sonde doit fonctionner à des températures de l'ordre de 1000°C, par exemple pour le contrôle de l'atmosphère de fours de traitement de métaux ou autres matériaux. On rencontre le même inconvénient avec les sondes décrites dans les publications DE-OS 2 837 680, DE-OS 2 938 179 et d'autres encore.

On connait aussi par un article de la publication «Journal of Physics E. Scient. Instr.» parue en octobre 1979 une description d'un appareil de contrôle de plaquettes d'électrolyte solide destinées à la surveillance d'enceintes contenant des gaz. Les plaquettes sont appuyées contre l'extrémité d'un tube en alumine par un rebord périphérique interne d'une enveloppe tubulaire qui entoure le tube en alumine. Elles sont donc pincées entre ces deux pièces par leur périphérie. Les éléments qui transmettent la force d'appui sur la périphérie de la plaquette constituent également une électrode de référence de sorte que cet appareil, qui n'est pas une sonde mais un appareil de contrôle des plaquettes destinées aux sondes, présente les mêmes défauts que les sondes précitées.

Le but de la présente invention est de créer une sonde qui puisse être mise en service dans des fours fonctionnant à haute température, et dans laquelle on utilise des pastilles d'oxyde de zirconium de forme simple, facilement échangeables et tenues en place dans des conditions telles qu'une mesure fiable soit réalisée durant toute la durée de vie de la pastille.

Dans ce but, la sonde selon l'invention est caractérisée en ce que l'électrode de mesure est une pièce métallique pourvue de saillies qui appuient sur une zone centrale de la face de la pastille exposée au gaz, l'électrode de référence est une pièce métallique qui est en contact avec la pastille en plusieurs points de sa face exposée à l'atmosphère de référence, et l'étanchéité entre les deux atmosphères est réalisée par appui de la pastille contre un siège annulaire du support tubulaire, la force d'appui étant transmise par l'électrode de mesure.

Avec cette construciton, la pastille est maintenue en place par simple pression, de sorte qu'elle peut être échangée très facilement et très rapidement.

On va décrire ci-après, à titre d'exemple, une forme de réalisation de l'objet de l'invention en se référant au dessin annexé, dont

la fig. 1 est une vue en coupe schématique de la sonde, représentée en place dans un four, et

la fig. 2 une vue en coupe axiale partielle à plus grande échelle montrant l'élément de mesure proprement dit.

Au dessin, la pastille 1 d'oxyde de zirconium fritté et stabilisé à l'yttrium, est portée par le support tubulaire 2, dont la partie centrale rectiligne constituée en acier réfractaire, ou le cas échéant en inconel (alliage de nickel, de chrome et de fer), est engagée à l'intérieur d'un second tube 3 qui forme une gaine et qui traverse une ouverture 4 ménagée dans la paroi 5 du four. La longueur totale de la sonde peut être de l'ordre de 70 cm à 1 m, l'extrémité située à l'intérieur du four constituant une tête de mesure tandis que l'autre extrémité qui reste à l'extérieur du four et qui, par conséquent, se trouve à la température ambiante, porte les accès à l'intérieur de la sonde, ainsi que les raccords aux divers éléments de l'instrumentation de mesure. On notera ici que le tube 3 de la gaine sera aussi de préférence en acier réfractaire ou en inconel et qu'il est revêtu intérieurement d'une couche 6 de platine. Entre le support tubulaire 2 et le tube 3 de la gaine, on place, à l'extrémité extérieure de la sonde, un joint d'étanchéité 7, par exemple, un anneau torique en caoutchouc du genre o-ring.

Avant de passer à la description détaillée de la tête de mesure, on énumérera les éléments qui se trouvent à l'extérieur du four, c'est-à-dire à l'extrémité de la sonde opposée à la tête de mesure. Tout d'abord, la gaine 3 porte un raccord 8 équipé d'une soupape 9. Comme on le verra plus loin, on peut par cette soupape soutirer en permanence des échantillons du gaz constituant l'atmosphère du four, afin de procéder à leur analyse à titre de contrôle ou à la détermination de leur point de rosée.

Un fil de connexion 10 raccordé à l'extrémité de la gaine permet de conduire à un appareillage de mesure (non représenté) le potentiel de l'électrode de mesure.

L'extrémité externe de la gaine est conformée de façon à constituer une sorte de boîtier cylindrique 11 contenant différents éléments sur lesquels on reviendra partiellement plus tard.

D'autre part, le support tubulaire 2 en acier réfractaire présente à l'intérieur du boîtier 11 une embase 12, dont la forme est telle que l'accès à l'intérieur de ce support est préservé à travers une ouverture 13 du boîtier.

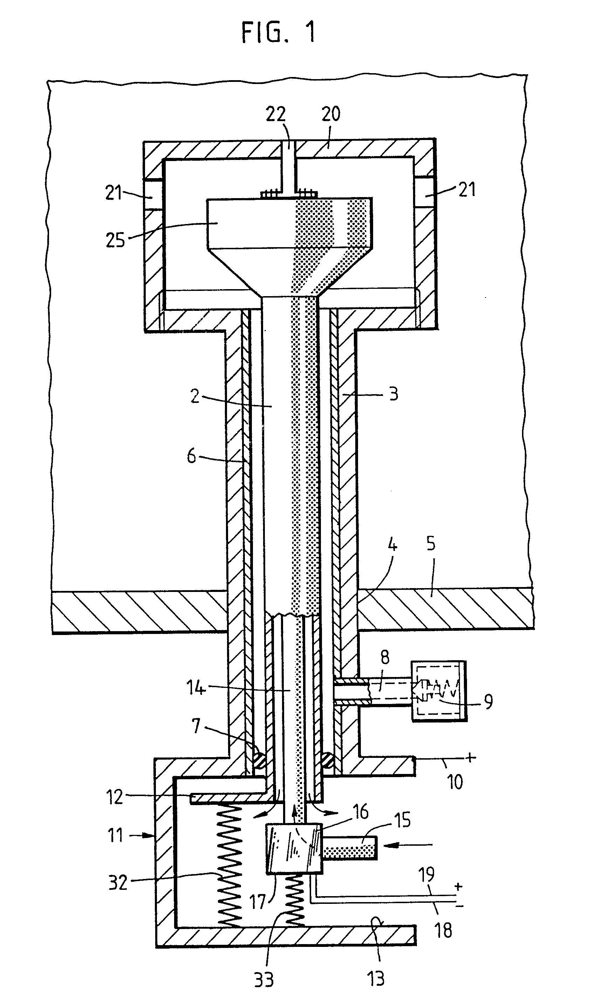

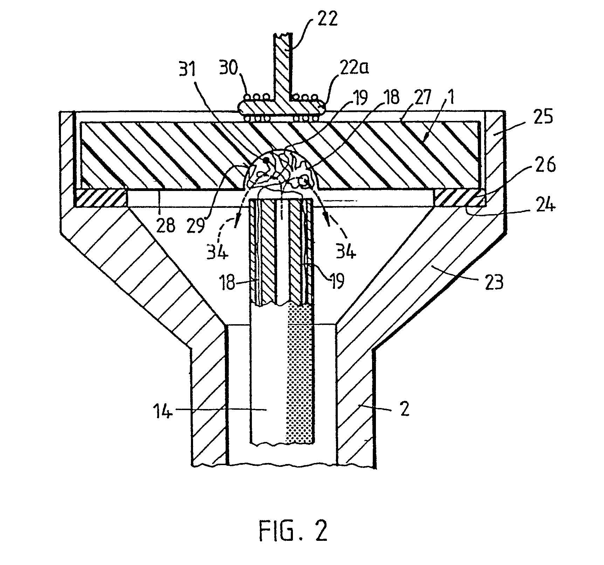

Un troisième tube 14 en une matière isolante, par exemple en céramique, est logé à l'intérieur du support 2. Il s'étend selon l'axe de la sonde. Selon la vue en coupe détaillée de la fig. 2, ce conduit 14 présente trois passges parallèles, dont l'un se trouve au centre du tube et les deux autres sont diamétralement opposés. En variante, on pourrait aussi utiliser un tube en céramique pourvu de quatre conduits répartis autour de l'axe du tube. La fig. 1 montre, d'autre part, qu'à son extrémité opposée à la tête de mesure, le tube 14 communique latéralement avec un raccord 15 à travers un boîtier cylindrique 16 fermé du côté axial et vers l'arrière par une paroi plane 17. De ce boîtier sortent deux fils 18 et 19, qui sont les deux éléments conducteurs d'un thermocouple, de préférence d'un thermocouple du type platine-platine rhodié (à 13% de rhodium), ces deux conducteurs étant conduits à l'appareillage de mesure. Par le raccord 15, on peut faire pénétrer à l'intérieur du conduit 14 un gaz de référence dont on parlera plus loin, alors que ce même gaz de référence peut être extrait par une sortie entre le conduit 14 et le tube de support 2.

La tête de mesure proprement dite comporte une coiffe en inconel 20, qui est représentée schématiquement à la fig. 1 et qui est fixée, par exemple par vissage, à l'extrémité interne du tube 3 en acier réfractaire de la gaine. Cette coiffe 20 présente des trous latéraux 21 qui mettent l'intérieur de la gaine en communication avec l'atmosphère du four. Elle porte d'autre part à son sommet, qui est représenté selon une paroi plane à la fig. 1, mais qui, de préférence, peut être de forme conique, une ouverture dans laquelle est vissé un élément d'appui 22, c'est-à-dire une tige d'inconel dont l'extrémité intérieure a la forme d'un disque ou d'une plaque allongée 22a (Fig. 2) qui s'étend perpendiculairement à l'axe de la gaine.

La Fig. 2 montre aussi le conduit 14 et l'extrémité côté tête de mesure du support tubulaire 2 en acier réfractaire. Ce support s'évase sous forme d'une collerette tronconique 23 limitée dans le sens axial par un épaulement plan 24 et par une paroi périphérique mince 25. Sur l'épaulement 24 est ajusté un anneau de profil rectangulaire 26 en platine qui présente des faces soigneusement rectifiées et qui constitue un joint d'étanchéité. La pastille de zirconium 1 repose sur cet anneau 26. Elle présente une forme cylindrique de faible hauteur avec une face extrême plane 27 qui est tournée du côté de l'intérieur du four et constitue la face de mesure, et une face extrême 28 opposée et parallèle à la face 27 et constituant la face de référence. Le diamètre extérieur de la pastille 1 peut être par exemple de 24 mm et son épaisseur de 4 mm, ces indications étant données à titre d'exemple. Au centre de la face de référence 28 est ménagé un logement 29 dont le fond est hémisphérique et les côtés cylindriques, et dont les dimensions sont telles que le fond de ce logement est situé par exemple à une distance de l'ordre de 1,5 mm de la face de mesure 27. On réalise ainsi une pastille de dimensions compactes qui présente par conséquent une grande résistance à la compression et à la flexion, même à température élevée et dans laquelle, d'autre part, la distance entre la face de mesure et la face de référence peut être réduit dans une mesure très considérable, ce qui augmente la précision de la mesure, comme on le verra plus loin.

L'électrode de mesure 30 est constituée dans la forme-d'exécution décrite par un fil de platine qui, de préférence, est enroulé autour de la barre transversale 22a de l'élément d'appui 22. Ce fil de platine peut présenter, par exemple, un diamètre de 0,5 à 0,6 mm. Cette disposition de l'électrode de mesure n'est pas la seule possible. Ainsi, on pourrait former l'électrode de mesure proprement dite en donnant à l'élément d'appui 22 la forme d'un plot en platine fixé à la coiffe 20 et dont la face tournée vers la pastille 1 est fraisée de façon qu'un réseau de nervures étroites (0,5 à 0,6 mm de largeur) s'étende en saillie sur cette face, et appuie sur la zone centrale de la face de mesure 27. En effet, on a constaté que la condition essentielle à réaliser est que l'électrode de mesure en platine présente de nombreuses parties saillantes en contact avec la face de mesure 27, mais laissant l'atmosphère du four circuler entre elles, de sorte qu'un bon contact entre les trois phases en présence, c'est-à-dire atmosphère du four, électrode de mesure et face de mesure de la pastille, soit réalisé.

Du côté de la face de référence 28 de la pastille 1, l'électrode de référence est constituée par les extrémités des deux fils 18 et 19 de platine et de platine rhodié qui sont soudés ensemble au point 31, de façon à constituer le thermocouple de mesure de la température. D'autre part, le segment extrême des deux fils 18 et 19 est replié sur lui-même et tordu en boule, de façon à occuper le logement 29, les deux fils 18 et 19 étant en contact avec la face interne du logement en un grand nombre de points. Comme on le voit, les deux fils 18 et 19 sont conduits par deux des canaux ménagés à l'intérieur du conduit 14, de sorte que la boule d'extrémité formant l'électrode de référence, peut être guidée et mise en place à l'intérieur du logement lors du montage avec la précision requise. Les expériences ont montré qu'il n'est pas nécessaire que tous les points de contact entre les fils 18 et 19 et la surface de référence de la pastille se trouvent sur la face interne du logement 29. On a également obtenu de bons résultats de mesure en donnant au logement 29 des dimensions juste suffisantes pour contenir la soudure entre les deux fils 18 et 19 et par conséquent pour constituer le point de mesure de la température, tandis que le captage du potentiel à la surface de référence de l'électrolyte solide se faisait par des points de contact répartis sur la face plane arrière de la pastille.

Revenant à la fig. 1, on voit qu'un organe de pression, schématisé au dessin sous la forme d'un ressort 32, agit entre le fond du boîtier 11 de la gaine et l'embase 12 du support tubulaire 2. Cet organe de pression peut être réglé de façon à exercer une force prédéterminée entre les deux constituants 2 et 3 de la tête de mesure et l'on voit que la réaction à cette force est une force d'appui qui s'exerce à travers l'élément d'appui 22 sur la pastille 1, au centre de la face de mesure, la réaction à cette force étant exercée par le joint d'étanchéité 26, situé à la périphérie de la pastille. Ainsi, la pastille 1 est tenue en place par des forces d'appui qui la sollicitent à la flexion. Il suffit de sortir la sonde du four et de dévisser la coiffe pour pouvoir éliminer la pastille 1 et la remplacer. L'expérience montre que, dans une construction pratique, on obtient avec la disposition représentée, une étanchéité parfaite au niveau du joint 26 entre l'atmosphère du four qui règne à l'intérieur de la gaine et l'atmosphère de référence qui règne à l'intérieur du support tubulaire 2. Selon que l'électrode de mesure est garnie d'un fil de platine, comme le fil 30, ou présente un réseau de nervures fraisées, la force d'appui optimale exercée au centre de la pastille pourra différer. Dans le premier cas, on a obtenu de bons résultats avec une force de 2 kg tandis que dans le second cas la force était de 7 kg.

A la fig. 1, on a encore représenté, sous forme schématique, un élément de pression 33 qui peut aussi être un ressort agissant entre le fond du boîtier 11 et la paroi arrière 17 du boîtier 16 solidaire du conduit 14. Cette force représente donc celle avec laquelle le thermocouple 18, 19 et, en particulier sa soudure 31, sont appuyés contre la face interne du logement 29, de façon à réaliser le contact multiple entre l'électrode de référence et la pastille d'électrolyte solide 1. Pour capter le potentiel de référence et mesurer la température correctement, la force du ressort 33 sera, par exemple, de 0,1 à 1 kg.

Il est important de préciser que les pastilles échangeables d'oxyde de zirconium présentent des faces planes opposées qui sont usinées mais ne portent aucun revêtement. De préférence, on prévoira un fraisage grossier sur la surface plane de mesure et un rectifiage fin sur la surface de référence.

En outre, contrairement à une pratique constante dans les sondes de mesure, l'oxyde de zirconium des pastilles ne contient pas d'oxyde de fer $Fe_3O_3$.

Bien entendu, dans une utilisation pratique de la sonde décrite, l'atmosphère de référence est constituée par de l'air. Pour entretenir la composition stable de cette atmosphère de référence, on injecte en permanence de l'air par le raccord 15 et par le conduit central du tube 14. Ce flux d'air représenté en 34 à la fig. 2 est soumis à une pression qui sera très légèrement supérieure à la pression règnant à l'intérieur de l'atmosphère du four. Ainsi, non seulement l'électrode de référence est constamment balayée par une atmosphère de référence ayant la constitution standard désirée mais, de plus, ce flux d'air entraîne avec lui vers la sortie les fuites qui pourraient encore subsister au niveau du joint 26.

La sonde décrite doit être complétée par un appareillage électronique comportant les instruments nécessaires à la conversion de la différence de potentiel mesurée entre les fils 18 et 19 afin d'obtenir la température, et à la conversion de la différence de potentiel mesurée entre les connexions 19 et 10, c'est-à-dire entre l'électrode de platine du thermocouple constituant la cathode du générateur de mesure, et la connexion 10 qui est reliée par la gaine à l'élément d'appui 22 et qui constitue l'anode de cette cellule électrolytique de mesure.

On notera que la sonde décrite permet non seulement un échange rapide et simple de la pastille d'électrolyte solide 1 mais également le remplacement de l'électrode de mesure 30 et de l'élément d'appui 22. En effet, ces pièces peuvent être fixées, par exemple, par vissage, à la coiffe 20 de sorte qu'elles sont aussi facilement interchangeables.

Les expériences faites montrent que les courbes de mesure prouvent une excellente sensibilité de mesure pour des teneurs en carbone entre 0,2% et 1,2% à 950°C, et entre 0,2% et 1,05% à 850°C. Le facteur de correction qu'il faut adopter est de l'ordre de 2. Ce facteur de correction se rapporte, comme on le sait, au calcul qu'il convient d'effectuer pour tenir compte de l'influence de la température et du rapport $CO/CO_2$ sur la pression partielle de l'oxygène.

Bien que l'on ait décrit plus haut des électrodes en platine et platine rhodié, il est évident que d'autres métaux peuvent également être utilisés pour constituer ces éléments du dispositif de mesure décrit. On pourrait notamment utiliser du platine et de l'or. D'autre part, alors que l'on a parlé d'air pour la constitution de l'atmosphère de référence, il est évident que cette atmosphère pourrait également être constituée par de l'oxygène pur ou par un mélange d'oxygène et de tout autre gaz. On remarque que l'étanchéité entre la partie interne de la gaine qui est occupée par l'atmosphère du four et l'extérieur, est assurée par la garniture en caoutchouc 7 qui, bien entendu, travaille à la température ambiante. L'avantage qu'il y a à utiliser à cet endroit un joint en caoutchouc est que ce joint permet de compenser les légères variations de position qui résultent de l'action de l'organe de pression 32 agissant entre le support tubulaire 2 et la gaine 3. Toutefois, au lieu d'un organe de pression constitué par un ressort 32, on peut également utiliser n'importe quel dispositif capable de créer entre les deux éléments qui supportent les électrodes, c'est-à-dire le support 2 et la gaine 3, la force de compression nécessaire pour assurer l'étanchéité de la pastille d'électrolyte solide. Ainsi par exemple, on pourrait utiliser un vérin ou tout autre dispositif pneumatique, hydraulique ou, le cas échéant, électromagnétique.

## Revendications

1. Sonde pour la mesure d'une pression partielle d'oxygène dans une atmosphère de gaz par rapport à une atmosphère de référence, comprenant une pastille d'électrolyte solide (1) montée dans une tête de mesure à une extrémité de la sonde, un support tubulaire (2) qui porte cette pastille et sépare l'atmosphère de gaz de l'atmosphère de référence, et des électrodes de mesure (22, 30) et de référence (18, 19) en contact chacune avec une des faces (27, 28) de la pastille, caractérisée en ce que l'électrode de mesure (22, 30) est une pièce métallique pourvue de saillies (30), qui appuie sur une zone centrale de la face (27) de la pastille (1) exposée au gaz, et permet une circulation de ce gaz assurant un contact permanent entre les trois phases en présence, l'électrode de référence (18, 19) est une pièce métallique qui est en contact avec la pastille (1) en plusieurs points de sa face (28) exposée à l'atmosphère de référence, et l'étanchéité entre les deux atmosphères est réalisée par appui de la pastille (1) contre un siège annulaire (26) du support tubulaire, la force d'appui étant transmise par l'électrode de mesure (22, 30).

2. Sonde selon la revendication 1, caractérisée en ce que le dit support tubulaire (2) est logé dans une gaine (3) portant à une extrémité une coiffe (20) amovible, et en ce que l'électrode de mesure (22, 30) est fixée à cette coiffe.

3. Sonde selon la revendication 2, caractérisée en ce que la coiffe (20) est pourvue d'ouvertures (21) qui font communiquer l'espace interne de la gaine avec l'atmosphère de gaz à sonder, et en ce qu'une garniture de joint (7) est placée entre la gaine (3) et le support tubulaire (2).

4. Sonde selon la revendication 2, caractérisée en ce qu'un organe de pression (32) est placé entre la gaine (3) et le support tubulaire (2) de manière à presser la pastille (1) contre le siège (26) par l'appui de l'électrode de mesure (22, 30) sur la face (27) exposée au gaz.

5. Sonde selon la revendication 1, caractérisée en ce que le siège (26) supportant la pastille (1) est une bague en platine montée sur un épaulement annulaire plan (24) du support tubulaire (2).

6. Sonde selon la revendication 1, caractérisée en ce que l'électrode de mesure (22, 30) comporte un fil de platine (30) enroulé autour d'un élément d'appui (22).

7. Sonde selon la revendication 2, caractérisé en ce que la gaine et la coiffe sont des pièces métalliques fixées en contact l'une avec l'autre, et transmettant le potentiel capté par l'électrode de mesure (23, 30).

8. Sonde selon la revendication 7, caractérisée en ce que la gaine (3) est revêtue intérieurement d'une couche de platine (6).

9. Sonde selon la revendication 1, caractérisée en ce que l'électrode de référence (18, 19) est combinée à un thermocouple, son potentiel et la différence de potentiel du thermocouple étant transmise à travers la sonde par deux fils conducteurs constituant les éléments du thermocouple.

10. Sonde selon la revendication 9, caractérisée en ce que la face de mesure (27) de la pastille est plane, et en ce qu'un logement (29) est ménagé dans la face de référence (28), la soudure et les extrémités des deux fils du thermocouple (18, 19) étant repliées sur eux-mêmes en boule, engagés dans le dit logement et maintenus en contact avec la face de référence (28) de la pastille (1) en plusieurs points.

11. Sonde selon la revendication 9, caractérisée en ce qu'elle comporte en outre un conduit tubulaire en matière isolante (14) qui guide les fils (18, 19) du thermocouple constituant l'électrode de référence, en ce que ce conduit est engagé dans le support tubulaire (2) et en ce qu'il présente à son extrémité opposée à la tête de mesure un raccord (15) permettant l'envoi dans ce conduit d'un flux d'atmosphère de référence capable de balayer la pastille d'électrolyte solide (1) sur son côté baignant dans l'atmosphère de référence.

## Patentansprüche

1. Fühler zum Messen des Sauerstoffpartialdruckes in einer Gasatmosphäre bezüglich einer Bezugsatmosphäre, mit einer festen Elektrolyt-Pastille (1), die in einem Messkopf an einem Ende des Fühlers angeordnet ist, einem diese Pastille tragenden rohrförmigen Träger (2), der die Gasatmosphäre gegenüber der Bezugsatmosphäre trennt, eine Messelektrode (22, 30) und eine Bezugselektrode (18, 19), von denen jede eine der Seitenflächen (27, 28) der Pastille berührt, dadurch gekennzeichnet, dass die Messelektrode (22, 30) ein Metallstück mit Vorsprüngen (30) ist, die an einen mittleren Bereich der einen dem Gas ausgesetzten Seitenfläche (27) der Pastille (1) anliegen und die Zirkulation des Gases gestatten, um eine dauernde Berührung zwischen den drei anwesenden Phasen zu gewährleisten, dass die Bezugselektrode (18, 19) ein Metallstück ist, das mit mehreren Stellen der der Bezugsatmosphäre ausgesetzten Seitenfläche (28) der Pastille (1) in Berührung steht, und dass die Dichtigkeit zwischen den beiden Atmosphären durch das Anliegen der Pastille (1) an einen Sitzring (26) des rohrförmigen Trägers realisiert ist, wobei die Anpresskraft durch die Messelektrode (22, 30) übertragen wird.

2. Fühler nach Anspruch 1, dadurch gekennzeichnet, dass der genannte rohrförmige Träger (2) in einer Hülle (3) angeordnet ist, die an einem Ende eine lösbare Haube (20) besitzt, und dass die Messelektrode (22, 30) an der Haube befestigt ist.

3. Fühler nach Anspruch 2, dadurch gekennzeichnet, dass die Haube (20) zum Verbinden des Innenraumes der Hülle mit der zu untersuchenden Gasatmosphäre Öffnungen (21) aufweist und dass zwischen der Hülle (3) und dem rohrförmigen Träger (2) ein Dichtungsring (7) angeordnet ist.

4. Fühler nach Anspruch 2, dadurch gekennzeichnet, dass ein Druckorgan (32) zwischen der Hülle (3) und dem rohrförmigen Träger (2) so angeordnet ist, dass die Pastille (1) durch Anlage der Messelektrode (22, 30) an die dem Gas ausgesetzte Seitenfläche (27) gegen den Sitzring (26) gepresst wird.

5. Fühler nach Anspruch 1, dadurch gekennzeichnet, dass der die Pastille (1) tragende Sitzring (26) ein auf einer kreisringförmigen, ebenen Schulter (24) des rohrförmigen Trägers (2) angeordneter Platinring ist.

6. Fühler nach Anspruch 1, dadurch gekennzeichnet, dass die Messelektrode (22, 30) einen um ein Stützelement (22) gewickelten Platindraht (30) umfasst.

7. Fühler nach Anspruch 2, dadurch gekennzeichnet, dass die Hülle und die Haube aneinander befestigte metallische Stücke sind, die zum Übertragen des von der Messelektrode (22, 30) aufgenommenen Potentials dienen.

8. Fühler nach Anspruch 7, dadurch gekennzeichnet, dass die Innenseite der Hülle (3) mit einer Platinschicht (6) ausgekleidet ist.

9. Fühler nach Anspruch 1, dadurch gekennzeichnet, dass die Bezugselektrode (18, 19) mit einem Thermopaar kombiniert ist, deren Potential und das Differenzpotential des Thermopaares durch den Fühler hindurch mittels zwei die Elemente des Thermopaares bildenden Drähten übertragen wird.

10. Fühler nach Anspruch 9, dadurch gekennzeichnet, dass die Messseitenfläche (27) der Pastille eben ist, dass in der Bezugsseitenfläche (28) eine Vertiefung (29) vorhanden ist und dass die Lötstelle und die Enden der beiden Drähte des Thermopaares (18, 19) kugelförmig in sich gefaltet, in der genannten Vertiefung angeordnet und in an mehreren Stellen in Berührung mit der Bezugsseitenfläche (28) der Pastille (1) gehalten sind.

11. Fühler nach Anspruch 9, dadurch gekennzeichnet, dass er weiter ein Rohr (14) aus einem Isoliermaterial zum Führen der die Bezugselektrode bildenden Drähte (18, 19) des Thermopaares umfasst, und dass dieses Rohr in den rohrförmigen Träger (2) eingeführt ist und an seinem dem Messkopf gegenüberliegenden Ende ein Übergangsstück (15) zum Einführen einer Strömung der Bezugsatmosphäre in das Rohr aufweist, um zu ermöglichen, dass die von der Bezugsatmosphäre umspülte Seitenfläche der Elektrolyt-Pastille (1) von der genannten Strömung bestrichen wird.

## Claims

1. Probe for measuring oxygen partial pressure in a gas atmosphere as compared with a reference atmosphere, comprising a tablet of solid electrolyte (1) mounted in a measuring head at one end of the probe, a tubular support (2) bearing this tablet and separating the gas atmosphere from the reference atmosphere, and measuring (22, 30) and reference (18, 19) electrodes, each in contact with one of the faces (27, 28) of the tablet, characterized in that the measuring electrode (22, 30) is a metal part provided with projections (30), which presses on a central zone of the face (27) of the tablet (1) exposed to the gas and permits a circulation of this gas ensuring permanent contact between the three phases present together, the reference electrode (18, 19) is a metal part which is in contact with the tablet (1) at several points on the face (28) thereof exposed to the reference atmosphere, and the fluid-tightness between the two atmospheres is achieved by pressure of the tablet (1) against an annular seat (26) of the tubular support, the bearing force being transmitted by the measuring electrode (22, 30).

2. Probe according to claim 1, characterized in that the said tubular support (2) is accommodated in a casing (3) bearing a removable cap (20) at one end, and in that the measuring electrode (22, 30) is fixed to this cap.

3. Probe according to claim 2, characterized in that the cap (20) is provided with apertures (21) which cause the inner space of the casing to communicate with the gas atmosphere to be probed, and in that a gasket (7) is placed between the casing (3) and the tubular support (2).

4. Probe according to claim 2, characterized in that a pressure part (32) is placed between the casing (3) and the tubular support (2) so as to press the tablet (1) against the seat (26) through bearing of the measuring electrode (22, 30) against the face (27) exposed to the gas.

5. Probe according to claim 1, characterized in that the seat (26) supporting the tablet (1) is a platinum ring mounted on a plane annular shoulder (24) of the tubular support (2).

6. Probe according to claim 1, characterized in that the measuring electrode (22, 30) comprises a platinum wire (30) wound about a supporting element (22).

7. Probe according to claim 2, characterized in that the casing and the cap are metal parts fixed in contact with one another and transmitting the potential picked up by the measuring electrode (22, 30).

8. Probe according to claim 7, characterized in that the casing (3) is lined with a layer of platinum (6).

9. Probe according to claim 1, characterized in that the reference atmosphere (18, 19) is combined with a thermocouple, its potential and the potential difference from the thermocouple being transmitted through the probe by two conductive wires constituting the elements of the thermocouple.

10. Probe according to claim 9, characterized in that the measuring face (27) of the tablet is plane, and in that a hollow (29) is contrived in the reference face (28), the soldered junction and the ends of the two wires of thermocouple (18, 19) being folded back upon themselves into a ball, fitted into the said hollow, and held in contact with the reference face (28) of the tablet (1) at several points.

11. Probe according to claim 9, characterized in that it further comprises a tubular conduit of insulating material (14) which guides the wires (18, 19) of the thermocouple constituting the reference atmosphere, in that this conduit is fitted in the tubular support (2), and in that it has at the end thereof opposite the measuring head a coupling (15) permitting the sending into this conduit of a flow of reference atmosphere capable of sweeping the tablet of solid electrolyte (1) on the side thereof bathed in the reference atmosphere.

# FIG. 1

FIG. 2